# EUROPEAN PATENT APPLICATION

(11) **EP 4 746 128 A1**
(43) Date of publication of application: **20.05.2026**
(21) Application number: 25849693.4
(22) Date of filing: 09.05.2025
(51) Int. Cl.: H01M 10/613

(54) **BATTERY APPARATUS AND ELECTRIC DEVICE**

(30) Priority: 14.08.2024 CN 202411116547
(71) Applicant: Contemporary Amperex Technology Co., Limited, Ningde, Fujian 352100 (CN)
(72) Inventor: BAO, Cong, Ningde, Fujian 352100 (CN)
(74) Representative: Kraus & Lederer PartGmbB
(86) International application number: PCT/CN2025/093964
(87) International publication number: WO 2026/036805

(57) **Abstract**

Embodiments of the present application disclose a battery apparatus and an electric device. The battery apparatus includes: a box body, configured to accommodate a battery cell, a beam being arranged in the box body; a thermal management component, arranged on the box body and configured to regulate temperature for the battery cell, the thermal management component including a flow guide pipe, the flow guide pipe being configured to fill or discharge a fluid inside the thermal management component; and a fixing member, the flow guide pipe extending through the fixing member and being fixed to the fixing member, the fixing member being fixed to the beam. The battery apparatus and the electric device according to the embodiments of the present application are capable of improving the reliability and stability of the battery apparatus.

## Description

The present application claims priority to Chinese Patent Application No. 202411116547.8, filed on August 14, 2024 and entitled "BATTERY APPARATUS AND ELECTRIC DEVICE", which is incorporated herein by reference in its entirety.

### TECHNICAL FIELD

The present application relates to the field of batteries, and more particularly, to a battery apparatus and an electric device.

### BACKGROUND

Energy conservation and emission reduction are key to sustainable development of the automotive industry. In this case, electric vehicles have become an important component of the sustainable development of the automotive industry due to advantages thereof in energy efficiency and environmental protection. For electric vehicles, a battery technology is an important factor regarding the development thereof.

In the development of the battery technology, in addition to improving the battery performance, safety issues are also a problem that cannot be ignored. If the safety issues of the battery cannot be ensured, then the battery cannot be used. Therefore, how to improve the safety and reliability of the battery is a technical problem that urgently needs to be solved in the battery technology.

### SUMMARY

Embodiments of the present application provide a battery apparatus and an electric device, which are capable of improving the reliability and stability of the battery.

In a first aspect, provided is a battery apparatus. The battery apparatus includes: a box body, configured to accommodate a battery cell, a beam being arranged in the box body; a thermal management component, arranged on the box body and configured to regulate temperature for the battery cell, the thermal management component including a flow guide pipe, the flow guide pipe being configured to fill or discharge a fluid inside the thermal management component; and a fixing member, the flow guide pipe extending through the fixing member and being fixed to the fixing member, the fixing member being fixed to the beam.

Therefore, in the battery apparatus according to this embodiment of the present application, by arranging the fixing member, the relative fixation between the flow guide pipe and the beam inside the box body can be achieved, thus improving the stability of the flow guide pipe during use of the battery, reducing the risk of loosening of the flow guide pipe, and reducing the risk of fluid leakage inside the thermal management component, so as to improve the reliability and stability of the battery apparatus.

In some embodiments, the flow guide pipe extends through the fixing member along a thickness direction of the fixing member, and a stepped structure is arranged on a side of the fixing member perpendicular to the thickness direction of the fixing member, so as to reduce the deformation of the fixing member through the stepped structure, increase the structural strength and stability of the fixing member, and thus improve the stability of the flow guide pipe.

In some embodiments, the beam includes a first beam and a second beam extending in different directions and arranged to intersect, and the fixing member is fixed to the first beam and the second beam respectively, so as to improve the stability between the fixing member and the beam.

In some embodiments, the fixing member includes a first fixing portion and a second fixing portion, the first fixing portion is fixed to the first beam through a first connecting member, and the first connecting member extends through the first fixing portion and is fixed to the first beam; the second fixing portion is fixed to the second beam through a second connecting member, and the second connecting member extends through the second fixing portion and is fixed to the second beam, so as to obtain a simple and stable structure and facilitate the mounting.

In some embodiments, the first fixing portion and/or the second fixing portion is provided with a reinforcing rib, so as to enhance the structural strength of the fixing member, and improve the connection stability between the fixing member and the first beam as well as between the fixing member and the second beam.

In some embodiments, the box body includes: a first box body portion, the first box body portion being a hollow structure with an opening, the beam being located inside the first box body portion, the first box body portion being provided with the thermal management component; and a second box body portion, configured to cover the opening, the fixing member being fixed to the second box body portion. The fixing member can fix the flow guide pipe to the beam inside the first box body portion of the box body, and can also fix the flow guide pipe to the second box body portion of the box body, thus further improving the stability of the flow guide pipe, reducing the risk of loosening of the flow guide pipe, and reducing the risk of fluid leakage inside the thermal management component, so as to improve the reliability and stability of the battery apparatus.

In some embodiments, the second box body portion includes an opening area, and the flow guide pipe extends through the opening area to expose the flow guide pipe, so as to allow the flow guide pipe to extend to the outside of the box body, thus helping to fill or discharge the fluid inside the thermal management component through the flow guide pipe.

In some embodiments, the fixing member is fixed to a first wall of the second box body portion, and the first wall is perpendicular to a height direction of the box body, so as to improve the structural stability between the fixing member and the box body.

In some embodiments, a sealing member is arranged between the fixing member and the second box body portion, so as to improve the sealing performance between the fixing member and the second box body portion.

In some embodiments, the fixing member is provided with a groove with an opening towards the second box body portion, and the groove is configured to accommodate the sealing member, so as to facilitate the positioning and mounting of the sealing member, also reduce space occupied by the sealing member inside the box body, and improve the space utilization rate of the box body.

In some embodiments, the fixing member includes a third fixing portion, the third fixing portion is fixed to the second box body portion through a third connecting member, and the third connecting member extends through the second box body portion and is fixed to the third fixing portion, so as to make the structure simple and easy to implement, and improve the connection strength and stability between the fixing member and the second box body portion through the third connecting member.

In some embodiments, a protruding structure is arranged on a side of the third fixing portion away from the second box body portion, and the protruding structure protrudes towards a direction away from the second box body portion, so as to increase the thickness of the third fixing portion and improve the structural strength, as well as the connection strength and stability between the fixing member and the second box body portion.

In some embodiments, the fixing member is a die-cast structure, which not only facilitates the manufacturing, but also can improve the structural strength of the fixing member, thus improving the stability of the flow guide pipe.

In some embodiments, the fixing member is provided with a through hole, the flow guide pipe extends through the fixing member through the through hole, a depth value range of the through hole is [2mm, 9mm], and optionally, the depth value range of the through hole is [4mm, 9mm]. On one hand, when the depth of the through hole is greater than or equal to 2mm, or further, greater than or equal to 4mm, the structural strength and stability of the fixing member can be improved, thus improving the stability of the flow guide pipe and the battery apparatus. On the other hand, when the depth of the through hole is less than or equal to 9mm, the space occupied by the fixing member can be reduced, thus improving the internal space utilization rate of the battery apparatus.

In a second aspect, provided is an electric device, which includes: the battery apparatus according to the first aspect or any one of the embodiments in the first aspect, the battery apparatus being configured to supply power to the electric device.

In some embodiments, the electric device is a vehicle, a ship, or a spacecraft.

### BRIEF DESCRIPTION OF THE DRAWINGS

FIG. 1 is a schematic diagram of a vehicle according to an embodiment of the present application;
FIG. 2 is a schematic diagram of a structure of a battery apparatus according to an embodiment of the present application;
FIG. 3 is a schematic diagram of a local structure of a battery apparatus according to an embodiment of the present application;
FIG. 4 is an exploded schematic diagram of a local structure of a battery apparatus according to an embodiment of the present application;
FIG. 5 is an exploded schematic diagram of another local structure of a battery apparatus according to an embodiment of the present application;
FIG. 6 is a schematic diagram of a local structure of a battery apparatus according to an embodiment of the present application;
FIG. 7 is a schematic diagram of another local structure of a battery apparatus according to an embodiment of the present application;
FIG. 8 is a schematic diagram of a structure of a fixing member according to an embodiment of the present application;
FIG. 9 is a schematic diagram of another structure of a fixing member according to an embodiment of the present application;
FIG. 10 is a schematic diagram of an exploded structure of a box body according to an embodiment of the present application;
FIG. 11 is a cross-sectional schematic diagram of a battery apparatus according to an embodiment of the present application;
FIG. 12 is a cross-sectional schematic diagram of a battery apparatus according to another embodiment of the present application;
FIG. 13 is a schematic diagram of an exploded structure of a box body according to another embodiment of the present application; and
FIG. 14 is a cross-sectional schematic diagram of a battery apparatus according to yet another embodiment of the present application.

In the drawings, the figures are not drawn to actual scale.

### Reference signs:

1-vehicle; 10-battery apparatus; 11-box body; 11a-electrical chamber; 11b-collection chamber; 111-first box body portion; 1111-protection member; 112-second box body portion; 1121-opening area; 1122-first wall; 113-beam; 1131-first beam; 1132-second beam; 12-thermal management component; 121-flow guide pipe; 1211-riveting block; 13-fixing member; 131-first fixing portion; 1311-reinforcing rib; 132-second fixing portion; 133-third fixing portion; 1331-protruding structure; 134-stepped structure; 135-sealing member; 136-groove; 137-through hole; 141-first connecting member; 142-second connecting member; 143-third connecting member; 15-busbar component; 20-battery cell; 201-electrode terminal; 30-controller; 40-motor

### DETAILED DESCRIPTION OF PREFERRED EMBODIMENTS

The technical solutions in the embodiments of the present application will be described below with reference to the accompanying drawings.

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. In addition, the terms "include", "be provided with", and any other variants thereof in the description, claims and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

The term "and/or" in the present application is only an associative relationship for describing associated objects, indicating that three relationships may be present. For example, A and/or B may indicate three cases: the presence of only A; the presence of both A and B; and the presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

In the present application, "plurality" means two or more than two (including two). Similarly, "a plurality of groups" means two or more than two groups, and "a plurality of pieces" means two or more than two pieces.

In the embodiments of the present application, the battery cell may be a secondary battery, which refers to a battery cell that may be continuously used by activating an active material by means of charging the battery cell after discharging thereof.

The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, without limitation for the battery cell in the embodiments of the present application.

In some implementations, the battery cell in the embodiments of the present application may be a metal battery. Specifically, the metal battery may include, but is not limited to, a lithium metal secondary battery, a sodium metal battery, or a magnesium metal battery.

The battery cell generally includes an electrode assembly. The electrode assembly includes a positive electrode, a negative electrode, and a spacer. During charging and discharging of the battery cell, intercalation/de-intercalation of active ions (e.g., lithium ions) are enabled at the positive electrode and negative electrode by moving the active ions between the positive electrode and negative electrode. The spacer is provided between the positive electrode and the negative electrode to prevent the positive and negative electrodes from being short-circuited and to allow active ions to pass therethrough.

In some embodiments, the positive electrode and negative electrode may be a positive electrode sheet which may include a positive electrode current collector and a positive electrode active material disposed on at least one surface of the positive electrode current collector.

As an example, the positive electrode current collector has two surfaces opposite in the thickness direction thereof, and the positive electrode active material is provided on either one or both of the two opposite surfaces of the positive electrode current collector.

As an example, for the positive electrode current collector, a metal foil, a foamed metal, or a composite current collector may be employed. For example, as the metal foil, aluminum or stainless steel which is subjected to surface treatment by silver, stainless steel, copper, aluminum, nickel, carbon electrode, carbon, nickel, titanium, or the like can be employed. The foamed metal may be foamed nickel, foamed copper, foamed aluminum, foamed alloy, foamed carbon, or the like. The composite current collector may include a macromolecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a macromolecular material (a substrate of polypropylene, polyethylene terephthalate, polybutylene terephthalate, polystyrene, polyethylene, or the like).

As an example, the positive electrode active material may include at least one of the following materials: lithium-containing phosphate, lithium-transition metal oxide, and respective modified compounds thereof. However, the present application is not limited to these materials, and other conventional materials that can be used as a positive electrode active material of a battery may also be used. These positive electrode active materials may be used alone or in combination of two or more thereof. Here, examples of the lithium-containing phosphate may include, but are not limited to, at least one of lithium iron phosphate (e.g., LiFePO4, also referred to as LFP), a composite material of lithium iron phosphate and carbon, lithium manganese phosphate (e.g., LiMnPO4), a composite material of lithium manganese phosphate and carbon, lithium ferro-manganese phosphate, and a composite material of lithium ferro-manganese phosphate and carbon.

In some embodiments, the negative electrode may be a negative electrode plate, which may include a negative electrode current collector and a negative electrode active material provided on at least one surface of the negative electrode current collector.

As an example, the negative electrode current collector has two surfaces opposite in its own thickness direction, and the negative electrode active material is provided on either one or both of the two opposite surfaces of the negative electrode current collector.

As an example, for the negative electrode current collector, a metal foil, a foamed metal, or a composite current collector may be employed. For example, as the metal foil, aluminum or stainless steel which is subjected to surface treatment by silver, stainless steel, copper, aluminum, nickel, carbon electrode, carbon, nickel, titanium, or the like can be employed. The composite current collector may include a macromolecular material base layer and a metal layer. The foamed metal may be foamed nickel, foamed copper, foamed aluminum, foamed alloy, foamed carbon, or the like. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

In some implementations, the electrode assembly further includes a separator provided between a positive electrode and a negative electrode.

In some implementations, the spacer is a separator. The type of the separator is not particularly limited in the present application, and any well-known porous separator with good chemical stability and mechanical stability may be used.

As an example, the main material of the separator may be selected from at least one of glass fiber, non-woven fabric, polyethylene, polypropylene, polyvinylidene fluoride, and ceramics.

In some implementations, the spacer is a solid electrolyte. The solid electrolyte is disposed between the positive electrode and the negative electrode, and serves to transfer ions and separate the positive electrode and negative electrode.

In some implementations, the battery cell further includes an electrolyte that functions to conduct ions between the positive electrode and negative electrode. The type of the electrolyte is not specifically limited in the present application, and may be selected according to a requirement. The electrolyte may be liquid, gel, or solid.

In some implementations, the electrode assembly is provided with a tab that may conduct current from the electrode assembly. The tab includes a positive tab and a negative tab.

In some implementations, the battery cell may include a casing. The casing is used to enclose components such as the electrode assembly and the electrolyte. The casing may be a steel casing, an aluminum casing, a plastic casing (e.g., polypropylene), a composite metal casing (e.g., a copper-aluminum composite casing), an aluminum plastic film, or the like. The casing includes a case and an end cover.

A battery apparatus mentioned in the embodiments of the present application refers to a single physical module including one or a plurality of battery cells to provide a higher voltage and capacity. When there are a plurality of battery cells, the plurality of battery cells are connected in series, in parallel, or in series-parallel via a busbar component.

In some embodiments, the battery apparatus may be a battery pack including a box body and a battery cell, and the battery cell or the battery module is accommodated in the box body.

In some embodiments, the box body may be a part of a chassis structure of a vehicle. For example, a part of the box body may be at least a part of a floor of a vehicle, or a part of the box body may be at least a part of a cross beam and a side beam of a vehicle.

In some embodiments, the battery apparatus may be located at an energy storage device. The energy storage device includes an energy storage container, an energy storage cabinet, and the like.

In the development of the battery apparatus technology, various design factors, for example, performance parameters such as energy density, cycle life, discharge capacity, and charge/discharge rate are simultaneously taken into consideration. In addition, the safety of the battery apparatus needs to be taken into consideration. For the battery apparatus, during charging and discharging processes, significant temperature changes may occur in the battery apparatus. Therefore, a thermal management component may be arranged in the battery apparatus to regulate the temperature of the battery apparatus. Specifically, the thermal management component accommodates a fluid inside, so as to regulate the temperature for the battery cell. The thermal management component may include a flow guide pipe configured to fill or discharge the fluid inside. If there is no fixed structure between the flow guide pipe and the box body of the battery apparatus, or if only an insulating cable tie is used for bundling, the flow guide pipe may become unstable. During the use of the battery apparatus, it may easily become loose, thus potentially causing leakage of the fluid inside the thermal management component, which will affect the reliability and stability of the battery apparatus.

Therefore, embodiments of the present application disclose a battery apparatus and an electric device, which are capable of solving the above problems. The battery apparatus according to this embodiment of the present application includes a box body configured to accommodate a battery cell. A beam is arranged in the box body. The battery apparatus further includes a thermal management component configured to regulate temperature for the battery cell in the box body. The thermal management component includes a flow guide pipe. The flow guide pipe is configured to fill or discharge a fluid inside the thermal management component 12. The battery apparatus further includes a fixing member. The flow guide pipe extends through the fixing member and is fixed to the fixing member. The fixing member is fixed to the beam. By arranging the fixing member, the relative fixation between the flow guide pipe and the beam of the box body can be achieved, thus improving the stability of the flow guide pipe during use of the battery apparatus, reducing the risk of loosening of the flow guide pipe, and reducing the risk of fluid leakage inside the thermal management component, so as to improve the reliability and stability of the battery apparatus.

The technical solutions described in the embodiments of the present application are all applicable to various electric devices using the battery apparatus.

The electric device may be a vehicle, a cell phone, a portable device, a notebook computer, a ship, a spacecraft, an electric toy, an electric tool, etc. The vehicle may be a fuel vehicle, a gas vehicle, or a new energy vehicle, and the new energy vehicle may be a battery electric vehicle, a hybrid vehicle, or a range-extended electric vehicle. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like. In the embodiments of the present application, the above described electrical apparatus is not particularly limited.

To facilitate description, in the following embodiments, a vehicle is used as an example of the electric device.

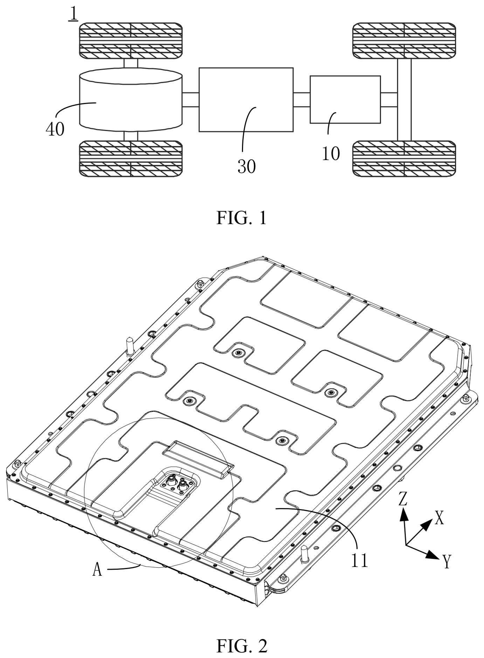

For example, as shown in FIG. 1, it is a schematic structural diagram of a vehicle 1 according to an embodiment of the present application. The vehicle 1 may be a fuel vehicle, a gas vehicle, or a new energy vehicle, and the new energy vehicle may be a battery electric vehicle, a hybrid vehicle, or a range-extended electric vehicle, or the like. A motor 40, a controller 30, and a battery apparatus 10 may be arranged inside the vehicle 1. The controller 30 is configured to control the battery apparatus 10 to supply power to the motor 40. For example, the battery apparatus 10 may be arranged at a bottom, head, or tail of the vehicle 1. The battery apparatus 10 may be configured to supply power to the vehicle 1. For example, the battery apparatus 10 may be used as an operating power source of the vehicle 1, for a circuit system of the vehicle 1, such as for operating power requirements for starting, navigation, and running of the vehicle 1. In another embodiment of the present application, the battery apparatus 10 may be used not only as the operating power source of the vehicle 1, but also as a driving power source of the vehicle 1, replacing or partially replacing fuel or natural gas to provide driving power to the vehicle 1.

To meet different power requirements, the battery apparatus may include a plurality of battery cells. The plurality of battery cells may be connected through series connection, parallel connection or series-parallel connection. The series-parallel connection refers to a mixture of series connection and parallel connection. The battery apparatus may also be referred to as a battery pack. Optionally, the plurality of battery cells may first form a battery module through series connection, parallel connection, or series-parallel connection, and then a plurality of battery modules form the battery apparatus through series connection, parallel connection, or series-parallel connection. That is, the plurality of battery cells may directly constitute the battery apparatus, or may constitute the battery module first, and the battery modules constitute the battery apparatus.

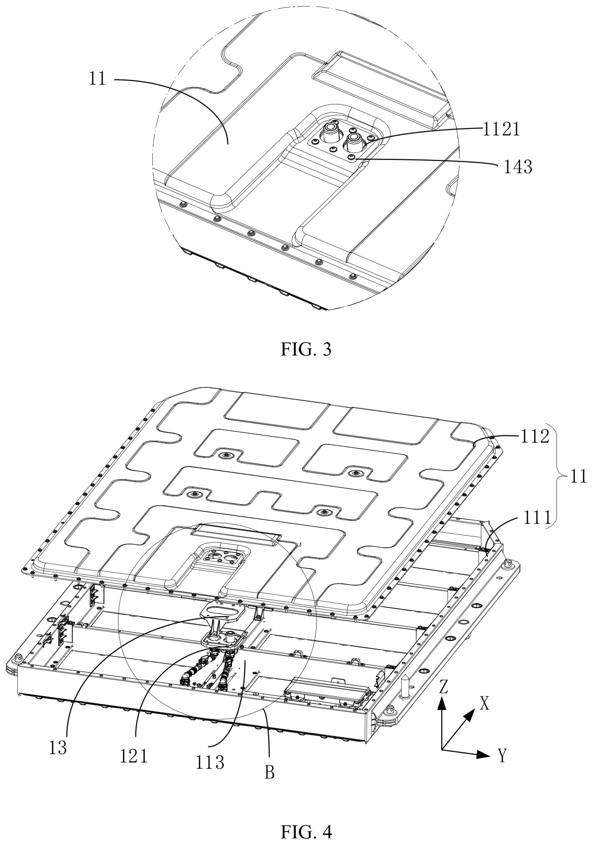

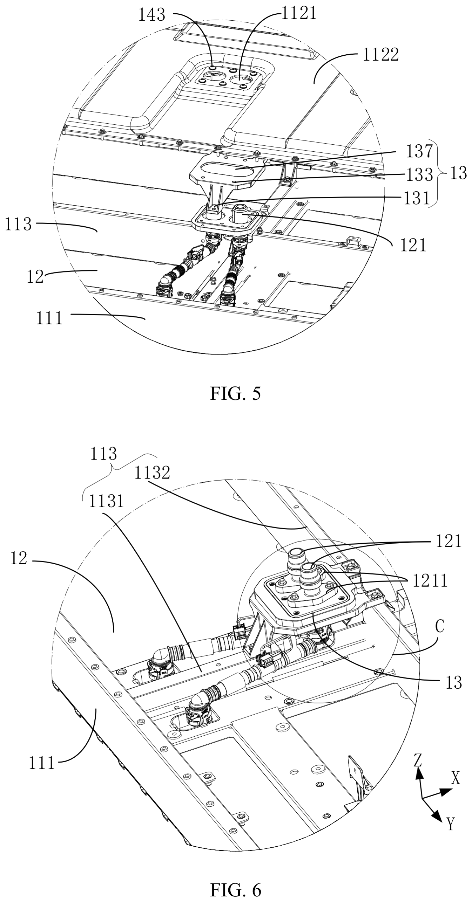

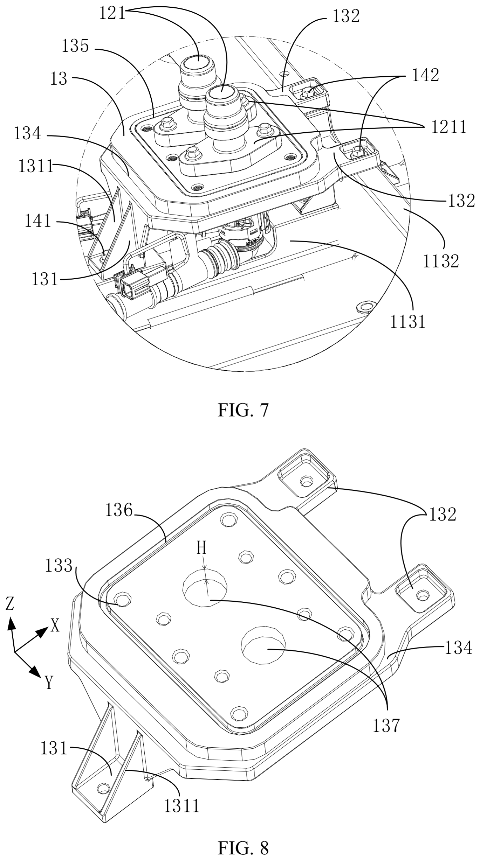

FIG. 2 shows a schematic diagram of a structure of a battery apparatus 10 according to an embodiment of the present application. FIG. 3 shows a schematic diagram of a local structure of a battery apparatus 10 according to an embodiment of the present application. For example, FIG. 3 may be an enlarged schematic diagram of an area A in FIG. 2. FIG. 4 shows an exploded schematic diagram of a local structure of a battery apparatus 10 according to an embodiment of the present application. For example, FIG. 4 may be an exploded schematic diagram of a local structure of the battery apparatus 10 shown in FIG. 2. FIG. 5 shows an exploded schematic diagram of a local structure of a battery apparatus 10 according to an embodiment of the present application. For example, FIG. 5 may be an enlarged diagram of an area B of the battery apparatus 10 shown in FIG. 4. FIG. 6 shows a schematic diagram of a local structure of a battery apparatus 10 according to an embodiment of the present application. For example, FIG. 6 shows a possible internal local structure of a box body 11 of the battery apparatus 10 shown in FIG. 2 at the area A. FIG. 7 shows a schematic diagram of a local structure of a battery apparatus 10 according to an embodiment of the present application. For example, FIG. 7 may be an enlarged schematic diagram of an area C shown in FIG. 6.

In some embodiments of the present application, the battery apparatus 10 includes: a box body 11, a thermal management component 12, and a fixing member 13. Specifically, as shown in FIG. 2 to FIG. 7, the box body 11 is configured to accommodate a battery cell 20. A beam 113 is arranged in the box body 11. The thermal management component 12 is arranged on the box body 11 and configured to regulate temperature for the battery cell 20. The thermal management component 12 includes a flow guide pipe 121. The flow guide pipe 121 is configured to fill or discharge a fluid inside the thermal management component 12. The flow guide pipe 121 extends through the fixing member 13 and is fixed to the fixing member 13. The fixing member 13 is fixed to the beam 113.

It should be understood that the inside of the box body 11 in this embodiment of the present application is a hollow structure, so as to accommodate a plurality of battery cells 20 in the box body 11. The shape of the box body 11 may be configured according to the actual application. For example, this embodiment of the present application is described mainly by taking an approximately cuboidal box body 11 as an example, but this embodiment of the present application is not limited thereto. In addition, for ease of description, three mutually perpendicular directions are defined based on the box body 11. The three directions are a length direction X, a width direction Y, and a height direction Z of the battery apparatus 10.

At least one beam 113 is arranged the box body 11 to divide the space inside the box body 11 into a plurality of subspaces. Each subspace is configured to accommodate at least one battery cell 20. For example, when a plurality of beams 113 are arranged in the box body 11, extension directions of the plurality of beams 113 may be the same or different, so as to make reasonable use of the space inside the box body 11 and improve the internal space utilization rate of the box body 11.

The thermal management component 12 in this embodiment of the present application is arranged on the box body 11. For example, the thermal management component 12 may be located inside the box body 11, or the thermal management component 12 may be any wall of the box body 11, so as to simplify the structure of the box body 11. this embodiment of the present application is not limited thereto.

The thermal management component 12 in this embodiment of the present application is configured to regulate the temperature for the battery cell 20. Specifically, the thermal management component 12 may be configured to accommodate a thermal management medium to regulate the temperature for the battery cell 20. When cooling the battery cell 20, the thermal management component 12 may accommodate a cooling medium to reduce the temperature of the battery cell 20. In this case, the thermal management component 12 may also be referred to as a cooling component, a cooling system, a cooling plate, or the like. In addition, the thermal management component 12 may also be configured to heat the battery cell 20, such as heating the battery cell 20 in a cold working environment. this embodiment of the present application is not limited thereto.

The thermal management component 12 in this embodiment of the present application includes a flow guide pipe 121. The flow guide pipe 121 is configured to fill or discharge a fluid inside the thermal management component 12. Further, the thermal management component 12 may further include a flow channel structure. The flow channel structure is a channel for circulating the thermal management medium. The flow channel structure may be a flow channel pipe or a plate-shaped structure with a flow channel. The thermal management component 12 may include one or more flow guide pipes 121. For example, if the thermal management component 12 includes a plurality of flow guide pipes 121, at least one flow guide pipe 121 exists in the plurality of flow guide pipes 121, and the at least one flow guide pipe 121 may serve as a water inlet connector and is configured to fill a thermal management medium into the thermal management component 12. For example, is may be configured to fill the thermal management medium into the flow channel structure. At least one flow guide pipes 121 also exists in the plurality of flow guide pipes 121, and the at least one flow guide pipe 121 may serve as a water outlet connector and is configured to discharge the thermal management medium inside the thermal management component 12. For example, it may be configured to discharge the thermal management medium inside the flow channel structure. In this way, the plurality of flow guide pipes 121 cooperate with each other to enable cyclic flow of the thermal management medium inside the thermal management component 12, so as to achieve enhanced temperature regulation.

The flow guide pipe 121 in this embodiment of the present application extends through the fixing member 13 and is fixed to the fixing member 13. If the thermal management component 12 includes a plurality of flow guide pipes 121, the plurality of flow guide pipes 121 may be fixed to one or more fixing members 13. For example, as shown in FIG. 2 to FIG. 7, taking the thermal management component 12 including two flow guide pipes 121 as an example, the two flow guide pipes 121 may extend through and be fixed to the same fixing member 13. Alternatively, differing from FIG. 2 to FIG. 7, different flow guide pipes 121 included in the thermal management component 12 may also be fixed through different fixing members 13. For example, if the plurality of flow guide pipes 121 included in the thermal management component 12 are spaced far apart from each other, a plurality of fixing members 13 may be arranged for fixation, so as to facilitate the mounting.

The fixing member 13 in this embodiment of the present application is configured to fix the flow guide pipe 121, while the fixing member 13 is fixed to the beam 113, that is, the relative fixation between the flow guide pipe 121 and the beam 113 of the box body 11 can be achieved through the fixing member 13, thus improving the stability of the flow guide pipe 121 during use of the battery apparatus 10, reducing the risk of loosening of the flow guide pipe 121, and reducing the risk of fluid leakage inside the thermal management component 12, so as to improve the reliability and stability of the battery apparatus 10.

It should be understood that the specific structure of the fixing member 13 in this embodiment of the present application may be configured according to the actual application. For example, the fixing member 13 in this embodiment of the present application is a die-cast structure, which not only facilitates the manufacturing, but also can improve the structural strength of the fixing member 13, thus improving the stability of the flow guide pipe 121. For example, the material of the fixing member 13 may be cast aluminum alloy, but this embodiment of the present application is not limited thereto.

In some embodiments, the flow guide pipe 121 extends through the fixing member 13 along a thickness direction Z of the fixing member 13, and a stepped structure 134 is arranged on a side of the fixing member 13 perpendicular to the thickness direction of the fixing member 13, that is, at least one side of the fixing member 13 perpendicular to the thickness direction Z of the fixing member 13 is not flat. so as to reduce the deformation of the fixing member 13 through the stepped structure 134, increase the structural strength and stability of the fixing member 13, and thus improve the stability of the flow guide pipe 121. This embodiment of the present application is described by taking the thickness direction of the fixing member 13 being the height direction Z of the box body 11 as an example, but this embodiment of the present application is not limited thereto.

In some embodiments, the position of the stepped structure 134 may be configured according to the actual application. Specifically, as shown in FIG. 2 to FIG. 7, the fixing member 13 has upper and lower sides perpendicular to the thickness direction Z of the fixing member 13. The stepped structure 134 may be located on at least one of the upper and lower sides, that is, at least one side of the fixing member 13 perpendicular to the thickness direction Z of the fixing member 13 is not flat due to the arrangement of the stepped structure 134. For example, the stepped structure 134 is located on a side of the fixing member 13 away from the beam 113, that is, the stepped structure 134 may be located on the upper side of the fixing member 13, so as to facilitate the mounting and fixation. For another example, the stepped structure 134 may be located at an edge of the fixing member 13, so as to facilitate the fixation between the fixing member 13 and the beam 113 as well as between the fixing member 13 and the flow guide pipe 121.

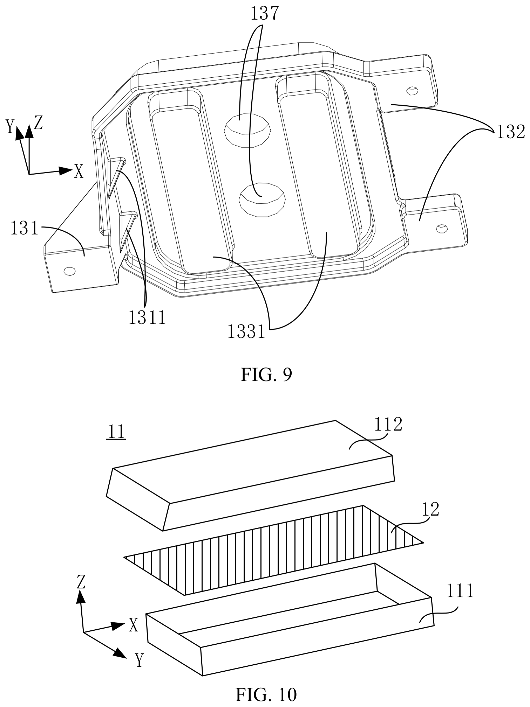

FIG. 8 and FIG. 9 respectively show structural schematic diagrams of the fixing member 13 according to this embodiment of the present application from different angles. That is, the fixing member 13 shown in FIG. 8 and FIG. 9 is the same fixing member 13 viewed from different angles, and the fixing member 13 may be the fixing member 13 included in the battery apparatus 10 shown in FIG. 6 to FIG. 7.

It should be understood that the flow guide pipe 121 in this embodiment of the present application extends through the fixing member 13. For example, as shown in FIG. 8 and FIG. 9, the fixing member 13 is provided with a through hole 137, and the flow guide pipe 121 extends through the fixing member 13 through the through hole 137, so as to facilitate the mounting and fixation. For example, in this embodiment of the present application, taking the fixing member 13 including a through hole 137 extending along the thickness direction Z of the fixing member 13 as an example, the flow guide pipe 121 then extends through the fixing member 13 along the thickness direction Z of the fixing member 13.

In some embodiments, the flow guide pipe 121 may be riveted to the fixing member 13 through a riveting block 1211, so as to fix the flow guide pipe 121 along the thickness direction Z of the fixing member 13. Additionally, the riveting block 1211 and the fixing member 13 may be fixed through fasteners such as bolts, so as to prevent the riveting block 1211 from rotating within the through hole 137, thus preventing the flow guide pipe 121 from rotating within the through hole 137.

In some embodiments, the number of the through holes 137 provided in the fixing member 13 may be configured according to the actual application. For example, as shown in FIG. 4 and FIG. 5, the fixing member 13 may be provided with only one through hole 137, such that all flow guide pipes 121 included in the thermal management component 12 extend through the through hole 137, so as to simplify the structure and facilitate the manufacturing. For example, the thermal management component 12 may include one or more flow guide pipes 121, and the one or more flow guide pipes 121 extend through the same through hole 137. For another example, as shown in FIG. 8 and FIG. 9, the fixing member 13 may be provided with a plurality of through holes 137, and the plurality of through holes 137 respectively correspond to the plurality of flow guide pipes 121 included in the thermal management component 12, that is, different flow guide pipes 121 included in the thermal management component 12 extend through different through holes 137 respectively, so as to improve the structural stability, but this embodiment of the present application is not limited thereto.

In some embodiments, the dimension of the through hole 137 may be configured according to the actual application. For example, the inner diameter of the through hole 137 may be configured according to the dimension of the flow guide pipe 121 extending through the through hole 137, so as to facilitate the fixation of the flow guide pipe 121.

For another example, the depth H of the through hole 137 may be configured according to the actual application. For example, as shown in FIG. 8 and FIG. 9, a value range of the depth H of the through hole 137 is [2mm, 9mm], or optionally, the value range of the depth H of the through hole 137 is [4mm, 9mm]. On one hand, when the depth of the through hole 137 is greater than or equal to 2mm, or further, greater than or equal to 4mm, the structural strength and stability of the fixing member 13 can be improved, thus improving the stability of the flow guide pipe 121 and the battery apparatus 10. On the other hand, when the depth of the through hole 137 is less than or equal to 9mm, the space occupied by the fixing member 13 can be reduced, thus improving the internal space utilization rate of the battery apparatus 10.

In some embodiments, the depth H of the through hole 137 may also be set to any of the following values or any range formed by any two of the following values: 2mm, 2.5mm, 3mm, 3.5mm, 4mm, 4.5mm, 5mm, 5.5mm, 6mm, 6.5mm, 7mm, 7.5mm, 8mm, 8.5mm, or 9mm.

It should be understood that the fixing member 13 in this embodiment of the present application is fixed to the beam 113, and the specific structure and fixing manner may be configured according to the beam 113.

In some embodiments, the beam 113 includes a first beam 1311 and a second beam 1132 extending in different directions and arranged to intersect, and the fixing member 13 is fixed to the first beam 1131 and the second beam 1132 respectively, so as to improve the stability between the fixing member 13 and the beam 113. As shown in FIG. 2 to FIG. 9, a plurality of beams 113 may be arranged in the box body 11 to divide the internal space of the box body 11 into a plurality of subspaces. The plurality of subspaces may be configured to accommodate battery cells 20 and may also be configured to accommodate other components, such as control components and detection components within the battery apparatus 10.

As shown in FIG. 2 to FIG. 9, the beam 113 in the box body 11 includes a first beam 1131 and a second beam 1132 extending in different directions and intersecting with each other. The fixing member 13 is simultaneously fixed to the first beam 1131 and the second beam 1132. For example, the fixing member 13 may be arranged close to an area where the first beam 1131 and the second beam 1132 intersect, so as to facilitate the mounting.

It should be understood that the first beam 1131 and the second beam 1132 in this embodiment of the present application may be any two intersecting beams inside the box body 11 of the battery apparatus 10. For example, the first beam 1131 and the second beam 1132 may be two beams inside the box body 11 close to a Battery Management System (BMS), so that the fixing member 13 is located in an area close to the BMS. For another example, the box body 11 may include an area for collectively arranging a plurality of battery cells 20. The first beam 1131 and the second beam 1132 may further be beams close to the area, or may be beams configured to form the area, such that the fixing member 13 is close to the area where the plurality of battery cells 20 are located. Considering that the thermal management component 12 is configured to regulate the temperature of the battery cells 20, the fixing member 13 configured to fix the flow guide pipe 121 is thus arranged close to the area of the plurality of battery cells 20. For example, the fixing member 13 may be located at an edge of the area where the plurality of battery cells 20 are arranged, thus facilitating the assembly of the battery apparatus 10.

In some embodiments, the fixing member 13 includes a first fixing portion 131 and a second fixing portion 132, the first fixing portion 131 is fixed to the first beam 1131 through a first connecting member 141, and the first connecting member 141 extends through the first fixing portion 131 and is fixed to the first beam 1131; the second fixing portion 132 is fixed to the second beam 1132 through a second connecting member 142, and the second connecting member 142 extends through the second fixing portion 132 and is fixed to the second beam 1132, so as to obtain a simple and stable structure and facilitate the mounting.

In some embodiments, the first connecting member 141 and the second connecting member 142 may be configured according to the actual application. For example, the first connecting member 141 and/or the second connecting member 142 may include a bolt, a screw, or a rivet. For another example, the first connecting member 141 and the second connecting member 142 may employ identical or different components. For example, as shown in FIG. 2 to FIG. 9, both the first connecting member 141 and the second connecting member 142 may be bolts, which not only facilitates the mounting and dismounting, but also can improve the connection stability between the fixing member 13 and the first beam 1131 as well as the second beam 1132.

It should be understood that the number of the first connecting member 141 and the second connecting member 142 in this embodiment of the present application may be configured according to the actual application. For example, as shown in FIG. 2 to FIG. 9, one or more first connecting members 141 may be arranged between the first fixing portion 131 and the first beam 1131, and one or more second connecting members 142 may be arranged between the second fixing portion 132 and the second beam 1132. Moreover, the number of the first connecting members 141 may be the same as or different from the number of the second connecting members 142. For example, two first connecting members 141 may be arranged between the first fixing portion 131 and the first beam 1131, so as to improve the connection strength and stability between the first fixing portion 131 and the first beam 1131.

In some embodiments, the first fixing portion 131 and/or the second fixing portion 132 is provided with a reinforcing rib 1311, so as to enhance the structural strength of the fixing member 13, and improve the connection stability between the fixing member 13 and the first beam 1131 as well as between the fixing member 13 and the second beam 1132. For example, as shown in FIG. 2 to FIG. 9, taking the first fixing portion 131 being provided with a reinforcing rib 1311 as an example, the position and number of the reinforcing rib 1311 may be configured according to the position of the first fixing portion 131.

In some embodiments, as shown in FIG. 2 to FIG. 9, the first fixing portion 131 of the fixing member 13 may be provided with a plurality of reinforcing ribs 1311, so as to improve the structural strength and stability between the first fixing portion 131 and the first beam 1131. For example, reinforcing ribs 1311 may be arranged on two opposite sides of the first fixing portion 131, so as to enable more uniform stress distribution across the first fixing portion 131 and effectively improve the structural strength of the first fixing portion 131.

In this embodiment of the present application, heights of different areas of the first beam 1131 may be the same or different. For example, as shown in FIG. 2 to FIG. 9, the first beam 1131 may be a stepped structure. Specifically, the height of a local area of the first beam 1131 covered by the fixing member 13 is typically larger, so as to increase the height of the fixing member 13, thus facilitating the fixation of the fixing member 13 to other components, for example, facilitating the fixation of the fixing member 13 to a wall above the box body 11. In contrast, the height of an area of the first beam 1131 away from the fixing member 13 is smaller, so as to avoid interference with other components inside the battery apparatus 10. For example, the flow guide pipe 121 of the thermal management component 12 is typically located in an area close to the edge inside the battery apparatus 10. This area may also accommodate other components, such as connectors of a busbar component 15 for achieving electrical connection among a plurality of battery cells 20, as well as management components within the battery apparatus 10 for controlling or monitoring the battery cells 20. The first beam 1131 with the smaller height can avoid interference with these components, thus facilitating the mounting.

In some embodiments, the first fixing portion 131 may be located in an area close to the stepped structure of the first beam 1131. For example, as shown in FIG. 2 to FIG. 9, the first fixing portion 131 extends along the thickness direction Z of the fixing member 13, so as to be fixedly connected to the first beam 1131. The first fixing portion 131 is provided with a reinforcing rib 1311, so as to improve the structural strength of the first fixing portion 131.

It should be understood that the fixing member 13 in this embodiment of the present application may also be fixed to other components of the box body 11.

In this embodiment of the present application, the battery apparatus 11 includes: a first box body portion 111, the first box body portion 111 being a hollow structure with an opening, the beam 113 being located inside the first box body portion 111, the first box body portion 111 being provided with the thermal management component 12; and a second box body portion 112, configured to cover the opening, the fixing member 13 being fixed to the second box body portion 112. The fixing member 13 can fix the flow guide pipe 121 to the beam 113 inside the first box body portion 111 of the box body 11, and can also fix the flow guide pipe 121 to the second box body portion 112 of the box body 11, thus further improving the stability of the flow guide pipe 121, reducing the risk of loosening of the flow guide pipe 121, and reducing the risk of fluid leakage inside the thermal management component 12, so as to improve the reliability and stability of the battery apparatus 10.

In some embodiments, the second box body portion 112 includes an opening area 1121, and the flow guide pipe 121 extends through the opening area 1121 to expose the flow guide pipe 121. As shown in FIG. 2 to FIG. 9, the fixing member 13 is fixed to the flow guide pipe 121 and to the beam 113. When the second box body portion 112 covers the opening of the first box body portion 111, the flow guide pipe 121 can be exposed through the opening area 1121 of the second box body portion 112, so as to allow the flow guide pipe 121 to extend to the outside of the box body 11, thus helping to fill or discharge the fluid inside the thermal management component 12 through the flow guide pipe 121. Further, taking the flow guide pipe 121 being fixed to the fixing member 13 through a riveting block 1211 as an example, the opening area 1121 of the second box body portion 112 can expose the flow guide pipe 121, and can further expose the riveting block 1211, so as to reduce the space occupied by the riveting block 1211 inside the box body 11.

In some embodiments, the fixing member 13 is fixed to a first wall 1122 of the second box body portion 112, and the first wall 1122 is perpendicular to the height direction Z of the box body 11. It should be understood that the structure of the second box body portion 112 in this embodiment of the present application may be configured according to the actual application. The first wall 1122 is perpendicular to the height direction Z of the box body 11 and is typically a wall of the box body 11 with a larger surface area. In this way, compared to arranging the fixing member 13 on other walls of the box body 11, such as side walls with a smaller surface area of the box body 11, it not only facilitates the mounting, but also can improve the structural stability.

For example, as shown in FIG. 2 to FIG. 9, the second box body portion 112 may be a grooved structure, and the first wall 1122 may be a bottom wall of the second box body portion 112 that is the grooved structure. The bottom wall of the second box body portion 112 is perpendicular to the height direction Z of the box body 11, that is, the fixing member 13 is fixed to the bottom wall of the second box body portion 112. For another example, the second box body portion 112 may also be a plate-shaped structure, the second box body portion 112 is perpendicular to the height direction Z of the box body 11, and the fixing member 13 is fixed to the second box body portion 112. For another example, the second box body portion 112 may also be a structure of other shapes, and the first wall 1122 is a wall of the second box body portion 112 that is perpendicular to the height direction Z of the box body 11.

In this embodiment of the present application, the fixing member 13 includes a third fixing portion 133, the third fixing portion 133 is fixed to the second box body portion 112 through a third connecting member 143, and the third connecting member 143 extends through the second box body portion 112 and is fixed to the third fixing portion 133, so as to make the structure simple and easy to implement, and improve the connection strength and stability between the fixing member 13 and the second box body portion 112 through the third connecting member 143. For example, the third fixing portion 133 may be arranged around the opening area 1121, so as to facilitate the mounting.

In some embodiments, a protruding structure 1331 is arranged on a side of the third fixing portion 133 away from the second box body portion 112, and the protruding structure 1331 protrudes towards a direction away from the second box body portion 112, so as to increase the thickness of the third fixing portion 133 and improve the structural strength, as well as the connection strength and stability between the fixing member 13 and the second box body portion 112. For example, the position of the protruding structure 1331 may be configured corresponding to the position of the third connecting member 143, so as to facilitate the fixation of the third connecting member 143.

In some embodiments, the third connecting member 143may be configured according to the actual application. For example, the third connecting member 143 may include a bolt, a screw, or a rivet. For another example, as shown in FIG. 2 to FIG. 9, the third connecting member 143 may be a bolt, which not only facilitates the mounting and dismounting, but also can improve the connection stability between the fixing member 13 and the second box body portion 112.

It should be understood that the number of the third connecting member 143 in this embodiment of the present application may be configured according to the actual application. For another example, as shown in FIG. 2 to FIG. 9, the third fixing portion 133 and the second box body portion 112 may be fixedly connected through a plurality of third connecting members 143. The plurality of third connecting members 143 are arranged around the opening area 1121, so as to improve the structural stability between the fixing member 13 and the second box body portion 112.

In some embodiments, a sealing member 135 is arranged between the fixing member 13 and the second box body portion 112, so as to improve the sealing performance between the fixing member 13 and the second box body portion 112. For example, the sealing member 135 may be arranged around the opening area 1121, so as to improve the sealing performance of the box body 11.

In some embodiments, the fixing member 13 is provided with a groove 136 with an opening towards the second box body portion 112, and the groove 136 is configured to accommodate the sealing member 135, so as to facilitate the positioning and mounting of the sealing member 135, also reduce space occupied by the sealing member 135 inside the box body 11, and improve the space utilization rate of the box body 11. For example, as shown in FIG. 2 to FIG. 9, the groove 136 may be arranged around the third fixing portion 133, so as to improve the sealing performance between the fixing member 13 and the second box body portion 112, thus improving the sealing performance of the box body 11.

It should be understood that the specific structure of the first box body portion 111 and the second box body portion 112 of the box body 11 in this embodiment of the present application may be configured according to the actual application.

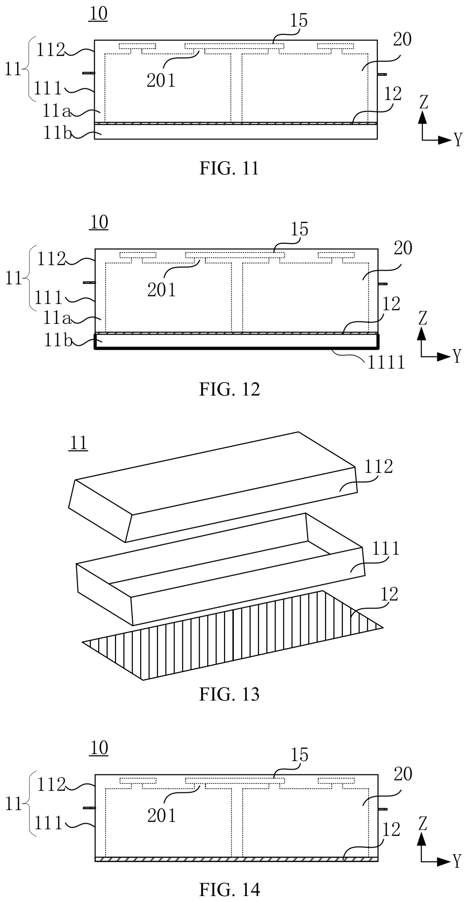

FIG. 10 shows a schematic diagram of an exploded structure of a box body 11 according to an embodiment of the present application. FIG. 11 shows a possible cross-sectional schematic diagram of a battery apparatus 10 according to an embodiment of the present application. For example, FIG. 11 may adopt the box body 11 shown in FIG. 10. FIG. 12 shows another possible cross-sectional schematic diagram of a battery apparatus 10 according to an embodiment of the present application. For example, FIG. 12 may adopt the box body 11 shown in FIG. 10. Cross-sections shown in FIG. 11 and FIG. 12 may be cross-sections perpendicular to the length direction X of the battery apparatus 10.

In this embodiment of the present application, the shapes of the first box body portion 111 and the second box body portion 112 may be determined according to the shapes of the components accommodated inside. For example, the shapes may be determined according to the combined shape of the plurality of battery cells 20 accommodated inside, and at least one of the first box body portion 111 and the second box body portion 112 is provided with an opening. For example, as shown in FIG. 10 to FIG. 12, the first box body portion 111 and the second box body portion 112 may both be hollow cuboids with one side being an opening side. The opening of the first box body portion 111 and the opening of the second box body portion 112 are arranged opposite to each other, the first box body portion 111 and the second box body portion 112 are fastened together to form the box body 11 with an enclosed chamber, and the chamber may be configured to accommodate the plurality of battery cells 20. The plurality of battery cells 20 combined through series connection, parallel connection or series-parallel connection with each other are arranged in the box body 11 formed by buckling the first box body portion 111 and the second box body portion 112.

For another example, different from FIG. 10 to FIG. 12, only one of the first box body portion 111 and the second box body portion 112 may be a hollow cuboid having an opening, and the other may be plate-shaped to cover the opening. For example, if the first box body portion 111 is a hollow cuboid with an opening, taking the second box body portion 112 being plate-shaped as an example, then the second box body portion 112 covers the opening of the first box body portion 111 to form the box body 11 with an enclosed chamber, and the chamber may be configured to accommodate the plurality of battery cells 20.

In some embodiments, the battery apparatus 10 may further include other components. For example, the battery apparatus 10 may further include a busbar component 15, and the busbar component 15 may be configured to achieve electrical connection among the plurality of battery cells 20, such as parallel connection, series connection, or series-parallel connection. Specifically, the busbar component 15 may achieve electrical connection among the battery cells 20 by connecting to electrode terminals 201 of the battery cells 20. Alternatively, the busbar component 15 may also achieve electrical connection among the battery cells 20 by connecting to other components of the battery cells 20. The busbar component 15 may be fixed by welding to corresponding components of the battery cell 20, such as to an electrode terminal 201, a sealing structure, or a case, but this embodiment of the present application is not limited thereto.

It should be understood that the first box body portion 111 in this embodiment of the present application is provided with a thermal management component 12. For example, the thermal management component 12 may be any one wall of the first box body portion 111, or the thermal management component 12 may be located inside the first box body portion 111.

In some embodiments, as shown in FIG. 10 to FIG. 12, the thermal management component 12 in this embodiment of the present application may be located inside the first box body portion 111. For example, the thermal management component 12 may be configured to divide the box body 11 into a plurality of spaces along the height direction Z of the battery apparatus 10, and at least some of the plurality of spaces are configured to accommodate the battery cells 20.

In some embodiments, the box body 11 may include an electrical chamber 11a, a collection chamber 11b, and a thermal management component 12. The thermal management component 12 is configured to isolate the electrical chamber 11a from the collection chamber 11b. As used herein, "isolate" refers to separation, which may be sealed or unsealed. The electrical chamber 11a is configured to accommodate the plurality of battery cells 20. Further, the electrical chamber 11a may also be configured to accommodate the busbar component 15, so as to achieve electrical connection among the plurality of battery cells 20. The electrical chamber 11a provides an accommodating space for the battery cells 20 and the busbar component 15. The shape of the electrical chamber 11a may be determined according to the plurality of battery cells 20 and the busbar component 15. At least one battery cell 20 of the plurality of battery cells 20 may include a pressure relief mechanism. For example, the pressure relief mechanism may be arranged on a wall of the battery cell 20 towards the thermal management component 12. The pressure relief mechanism is configured to actuate when an internal pressure or temperature of the battery cell 20 provided with the pressure relief mechanism reaches a threshold, so as to release the internal pressure or temperature. The collection chamber 11b is configured to collect ejecta from the battery cell 20 provided with the pressure relief mechanism when the pressure relief mechanism actuates.

The thermal management component 12 is adopted to isolate the electrical chamber 11a from the collection chamber 11b. That is to say, the electrical chamber 11a accommodating the plurality of battery cells 20 and the busbar component 15, and the collection chamber 11b for collecting ejecta are arranged separately from each other. In this way, when the pressure relief mechanism actuates, ejecta from the battery cell 20 are directed into the collection chamber 11b and do not enter, or only minimally enter, the electrical chamber 11a, thus reducing impact on electrical connection within the electrical chamber 11a and thereby enhancing the safety of the battery apparatus 10.

It should be understood that the first box body portion 111 may be a monolithic structure as shown in FIG. 11, or, as shown in FIG. 12, the first box body portion 111 may also include a plurality of components. For example, the first box body portion 111 may include a sidewall structure with two open ends and a protection member 1111, the protection member 1111 may be configured to close one open end of the sidewall structure with two open ends, and the second box body portion 112 is configured to close the other open end. The protection member 1111 may be configured to protect the thermal management component 12 and reduce damage to the thermal management component 12 from the external environment.

FIG. 13 shows a schematic diagram of an exploded structure of a box body 11 according to another embodiment of the present application. FIG. 14 shows another possible cross-sectional schematic diagram of a battery apparatus 10 according to an embodiment of the present application. For example, FIG. 14 may adopt the box body 11 shown in FIG. 13. Cross-section shown in FIG. 14 may be a cross-section perpendicular to the length direction X of the battery apparatus 10.

In some embodiments, as shown in FIG. 13 and FIG. 14, the thermal management component 12 may be any one wall of the first box body portion 111. Specifically, the first box body portion 111 includes a plurality of walls, and the thermal management component 12 may be any one of the plurality of walls. For example, the thermal management component 12 may be a bottom wall of the first box body portion 111 opposite to the opening, so as to improve the space utilization rate of the battery apparatus 10.

According to some embodiments of the present application, the present application further provides an electric device, including the battery apparatus described in any one of the above solutions, and the battery apparatus is configured to provide electric energy for the electric device.

The electric device may be any one of the above devices or systems using the battery apparatus.

According to some embodiments of the present application, referring to FIG. 2 to FIG. 9, an embodiment of the present application provides a battery apparatus 10. The battery apparatus 10 includes: a box body 11, configured to accommodate a battery cell 20, a beam 113 being arranged in the box body 11; a thermal management component 12, arranged on the box body 11 and configured to regulate temperature for the battery cell 20, the thermal management component 12 including a flow guide pipe 121, the flow guide pipe 121 being configured to fill or discharge a fluid inside the thermal management component 12; and a fixing member 13, the flow guide pipe 121 extending through the fixing member 13 and being fixed to the fixing member 13, the fixing member 13 being fixed to the beam 113. The fixing member 13 is a die-cast structure. The flow guide pipe 121 extends through the fixing member 13 along a thickness direction of the fixing member 13, and a stepped structure 134 is arranged on a side of the fixing member 13 perpendicular to the thickness direction of the fixing member 13.

The beam 113 includes a first beam 1131 and a second beam 1132 extending in different directions and arranged to intersect, and the fixing member 13 is fixed to the first beam 1131 and the second beam 1132 respectively. The first fixing portion 131 and/or the second fixing portion 132 is provided with a reinforcing rib 1311.

The box body 11 includes: a first box body portion 111, the first box body portion 111 being a hollow structure with an opening, the beam 113 being located inside the first box body portion 111, the first box body portion 111 being provided with the thermal management component 12; and a second box body portion 112, configured to cover the opening, the fixing member 13 being fixed to the second box body portion 112. The second box body portion 112 includes an opening area 1121, and the flow guide pipe 121 extends through the opening area 1121 to expose the flow guide pipe 121. A sealing member 135 is arranged between the fixing member 13 and the second box body portion 112. The fixing member 13 is provided with a groove 136 with an opening towards the second box body portion 112, and the groove 136 is configured to accommodate the sealing member 135.

Finally, it is to be noted that the foregoing embodiments are merely intended to describe the technical solutions of the present application, instead of limiting them. Although the present application has been described in detail with reference to the foregoing embodiments, those skilled in the art should understand that they may still make modifications to the technical solutions described in the foregoing embodiments, or make equivalent replacements to some or all of the technical features thereof; and such modifications or replacements do not cause the essence of the corresponding technical solutions to depart from the scope of the technical solutions of the embodiments of the present application, and they shall all fall within the scope of the claims and description of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery apparatus, comprising:
a box body (11), configured to accommodate a battery cell (20), a beam (113) being arranged in the box body (11);
a thermal management component (12), arranged on the box body (11) and configured to regulate temperature for the battery cell (20), the thermal management component (12) comprising a flow guide pipe (121), the flow guide pipe (121) being configured to fill or discharge a fluid inside the thermal management component (12); and
a fixing member (13), the flow guide pipe (121) extending through the fixing member (13) and being fixed to the fixing member (13), the fixing member (13) being fixed to the beam (113).

2. The battery apparatus according to claim 1, wherein the flow guide pipe (121) extends through the fixing member (13) along a thickness direction of the fixing member (13), and a stepped structure (134) is arranged on a side of the fixing member (13) perpendicular to the thickness direction of the fixing member (13).

3. The battery apparatus according to claim 1 or 2, wherein the beam (113) comprises a first beam (1131) and a second beam (1132) extending in different directions and arranged to intersect, and the fixing member (13) is fixed to the first beam (1131) and the second beam (1132) respectively.

4. The battery apparatus according to claim 3, wherein the fixing member (13) comprises a first fixing portion (131) and a second fixing portion (132), the first fixing portion (131) is fixed to the first beam (1131) through a first connecting member (141), and the first connecting member (141) extends through the first fixing portion (131) and is fixed to the first beam (1131);
the second fixing portion (132) is fixed to the second beam (1132) through a second connecting member (142), and the second connecting member (142) extends through the second fixing portion (132) and is fixed to the second beam (1132).

5. The battery apparatus according to claim 4, wherein the first fixing portion (131) and/or the second fixing portion (132) is provided with a reinforcing rib (1311).

6. The battery apparatus according to any one of claims 1 to 5, wherein the box body (11) comprises:
a first box body portion (111), the first box body portion (111) being a hollow structure with an opening, the beam (113) being located inside the first box body portion (111), the first box body portion (111) being provided with the thermal management component (12); and
a second box body portion (112), configured to cover the opening, the fixing member (13) being fixed to the second box body portion (112).

7. The battery apparatus according to claim 6, wherein the second box body portion (112) comprises an opening area (1121), and the flow guide pipe (121) extends through the opening area (1121) to expose the flow guide pipe (121).

8. The battery apparatus according to claim 6 or 7, wherein the fixing member (13) is fixed to a first wall (1122) of the second box body portion (112), and the first wall (1122) is perpendicular to a height direction of the box body (11).

9. The battery apparatus according to any one of claims 6 to 8, wherein a sealing member (135) is arranged between the fixing member (13) and the second box body portion (112).

10. The battery apparatus according to claim 9, wherein the fixing member (13) is provided with a groove (136) with an opening towards the second box body portion (112), and the groove (136) is configured to accommodate the sealing member (135).

11. The battery apparatus according to any one of claims 6 to 10, wherein the fixing member (13) comprises a third fixing portion (133), the third fixing portion (133) is fixed to the second box body portion (112) through a third connecting member (143), and the third connecting member (143) extends through the second box body portion (112) and is fixed to the third fixing portion (133).

12. The battery apparatus according to claim 11, wherein a protruding structure (1331) is arranged on a side of the third fixing portion (133) away from the second box body portion (112), and the protruding structure (1331) protrudes towards a direction away from the second box body portion (112).

13. The battery apparatus according to any one of claims 1 to 12, wherein the fixing member (13) is a die-cast structure.

14. The battery apparatus according to any one of claims 1 to 13, wherein the fixing member (13) is provided with a through hole (137), the flow guide pipe (121) extends through the fixing member (13) through the through hole (137), a depth value range of the through hole (137) is [2mm, 9mm], and optionally, the depth value range of the through hole (137) is [4mm, 9mm].

15. An electric device, comprising the battery apparatus according to any one of claims 1 to 14, the battery apparatus being configured to supply power to the electric device.
